# EUROPÄISCHE PATENTSCHRIFT

(11) **EP 2 909 833 B1**
(45) Veröffentlichungstag und Bekanntmachung des Hinweises auf die Patenterteilung: **13.07.2016**
(21) Anmeldenummer: 13726423.0
(22) Anmeldetag: 18.05.2013
(51) Int. Cl.: G10L 15/32, G01C 21/36, G10L 15/30, B60R 16/037, G10L 15/22

(54) **SPRACHERKENNUNG IN EINEM KRAFTFAHRZEUG**
SPEECH RECOGNITION IN A MOTOR VEHICLE
RECONNAISSANCE VOCALE DANS UNE VEHICULE AUTOMOBILE

(30) Priorität: 16.10.2012 DE 102012020204
(43) Veröffentlichungstag der Anmeldung: 26.08.2015
(73) Patentinhaber: Audi AG, 85045 Ingolstadt (DE); VOLKSWAGEN AG, 38436 Wolfsburg (DE)
(72) Erfinder: GRUCHALSKI, Gerd, 85049 Ingolstadt (DE); KANCHEVA, Tanya, Mountain View CA 94040 (US)
(74) Vertreter: Brandt, Kai
(86) Internationale Anmeldenummer: PCT/EP2013/001488
(87) Internationale Veröffentlichungsnummer: WO 2014/060054

(56) Entgegenhaltungen:
- US-A1- 2002 072 905
- US-A1- 2011 184 740

## Beschreibung

Die Erfindung betrifft ein Verfahren zur Spracherkennung in einem Kraftfahrzeug. Auf Grundlage einer Spracheingabe eines Benutzers wird mittels eines fahrzeuginternen Spracherkenners, der hier als Onboard-Spracherkenner bezeichnet ist, aus der Spracheingabe ein Sprachtext ermittelt. Zu der Erfindung gehören auch ein Infotainmentsystem für ein Kraftfahrzeug, welches das erfindungsgemäße Verfahren durchzuführen ausgelegt ist, sowie ein Kraftfahrzeug mit einer Verarbeitungseinrichtung zum Durchführen des erfindungsgemäßen Verfahrens.

Die heutigen Infotainment-Systeme in Fahrzeugen benutzen Systeme der automatisierten Spracherkennung oder ASR (Automatic Speech Recognition), um Spracheingaben von den Fahrern anzunehmen. Diese ASR können sich entweder in dem Fahrzeug selbst (an Bord - onboard) oder auf entfernten Servern (online) befinden. Die Erkennungsvorrichtungen können dafür ausgestattet sein, unterschiedliche Mengen von Aufgaben auszuführen.

In der EP 1 408 304 A1 ist ein Steuersystem für ein Kraftfahrzeug beschrieben, welches eine Sprachsteuerung von Geräten des Kraftfahrzeugs ermöglicht. Für die Erkennung einzelner Spracheingaben, das heißt deren Umwandlung in einen maschinenverarbeitbaren Sprachtext, wird ein fahrzeugexterner Spracherkenner genutzt, was im Zusammenhang mit der Erfindung als Offboard-Spracherkenner bezeichnet ist. Im Stand der Technik ist hierzu bekannt, den Sprachschall als Sprachsignal zu erfassen, welches dann digitalisiert wird und mittels einer Merkmalsextraktion für die Spracherkennung aufbereitet wird. Die extrahierten Merkmale werden dann über Mobilfunk an den Offboard-Spracherkenner übermittelt, welcher sein Erkennungsergebnis dann wieder per Mobilfunk dem Kraftfahrzeug bereitstellt. Nachteilig bei dieser Lösung ist, dass stets eine Mobilfunkverbindung zur Verfügung stehen muss, damit die Spracherkennung funktioniert.

In der EP 1 341 363 B1 ist ein Fahrerinformationssystem beschrieben, das ebenfalls einen Offboard-Spracherkenner nutzt. Zusätzlich kann ein Onboard-Spracherkenner für einfache Erkennungsaufgaben, wie beispielsweise das Erkennen von einzelnen Steuerkommandos, genutzt werden. Eine Entscheidungseinheit wechselt dabei bedarfsweise zwischen dem Onboard-Spracherkenner und dem Offboard-Spracherkenner, um einzelne Spracheingaben des Benutzers in einen Sprachtext umzuwandeln. Der Offboard-Spracherkenner ist dabei nur für die Erkennung im Rahmen eines Sprachdialogs ausgelegt. Der Onboard-Spracherkenner versteht dagegen nur einzelne Befehlsworte. Der Vorteil an einem Sprachdialogsystem ist, dass ein Spracherkenner eine Rückfrage stellen kann, falls er eine bestimmte Spracheingabe nicht verstanden hat. Nachteilig hierbei ist allerdings, dass dies zu einer Ablenkung des Fahrers bei einer Benutzung des Spracherkennungssystems während einer Fahrt führt.

In der US 2002/0072905 A1 und der US 2006/0235684 A1 sind sprachbedienbare Nutzerschnittstellen in einem Kraftfahrzeug beschrieben, die Onboard- und Offboard-Spracherkenner nutzen.

Der Erfindung liegt die Aufgabe zugrunde, in einem Kraftfahrzeug eine zuverlässige Spracherkennung bereitzustellen, die einen Benutzer im Kraftfahrzeug möglichst wenig vom Verkehrsgeschehen ablenkt.

Die Aufgabe wird durch ein Verfahren gemäß Patentanspruch 1, ein Infotainmentsystem gemäß Patentanspruch 8 und ein Kraftfahrzeug gemäß Patentanspruch 9 gelöst. Vorteilhafte Weiterbildungen der Erfindung sind durch die Unteransprüche gegeben.

Das erfindungsgemäße Verfahren stellt sicher, dass eine Spracheingabe ohne eine Rückfrage an den Benutzer einer automatischen Spracherkennung zum Erzeugen eines Sprachtextes zugeführt wird. Die verhindert bei Schwierigkeiten der Spracherkennung mit einer bestimmten Spracheingabe in vorteilhafter Weise die Ablenkung des Benutzers vom Verkehrsgeschehen. Das erfindungsgemäße Verfahren wird hierbei durch eine fahrzeuginterne Verarbeitungseinrichtung durchgeführt, die die Spracheingabe des Benutzers von einer fahrzeuginternen Erfassungseinrichtung, beispielsweise einem Mikrofon mit nachgeschalteter Signalverarbeitung, empfängt. Zumindest eine empfangene Spracheingabe wird hierbei durch die Verarbeitungseinrichtung einem fahrzeuginternen Onboard-Spracherkenner zugeführt. Von diesem empfängt die Verarbeitungseinrichtung dann ein erstes Erkennungsergebnis, also beispielsweise einen möglichen Sprachtextkandidaten oder auch eine Liste mehrerer möglicher Sprachtextkandidaten. Ein Sprachtextkandidat ist ein Text, der die Spracheingabe als Zeichenfolge wiedergibt.

Lautet die gesprochene Spracheingabe also "Hallo", so ist der korrekte Sprachtextkandidat die Zeichenfolge "Hallo". Statt des Klartextes "Hallo" kann als Spracherkennungsresultat der Sprachtextkandidat auch in symbolischer Form oder als Referenz auf einen Listeneintrag einer Liste möglicher Sprachtextkandidaten oder als Identifier (z.B. ID_0815) des Listeneintrags dargestellt sein.

Es soll nun die Möglichkeit verringert werden, dass auf Grundlage dieses ersten Erkennungsergebnisses eine Fehlerkennung erfolgt, also ein falscher Sprachtext ausgegeben wird, was den Benutzer unnötig ablenken würde. Hierzu wird durch die Verarbeitungseinrichtung die Spracheingabe ganz oder teilweise auch einem fahrzeugexternen Offboard-Spracherkenner zugeführt. Von diesem wird dann durch die Verarbeitungseinrichtung ein zweites Erkennungsergebnis empfangen, also wieder ein Sprachtextkandidat oder eine Liste aus mehreren Sprachtextkandidaten. Der endgültig als Erkennungsergebnis ausgegebene Sprachtext wird dann in Abhängigkeit sowohl von dem ersten als auch dem zweiten Erkennungsergebnis durch die Verarbeitungseinrichtung ermittelt.

Das erfindungsgemäße Verfahren weist den Vorteil auf, dass die Spracheingabe ganz oder teilweise einer doppelten Spracherkennung zugeführt wird, nämlich einmal der fahrzeuginternen und einmal der fahrzeugexternen. Der letztendlich als Erkennungsergebnis ausgegebene Sprachtext entspricht dann mit höherer Wahrscheinlichkeit dem vom Benutzer tatsächlich Gesagten. Im Zusammenhang mit der Erfindung ist unter einer Spracheingabe entweder das gewandelte Schallsignal, also ein Analogsignal oder ein Digitalsignal, zu verstehen oder aber auch ein bereits durch eine an sich bekannte Merkmalsextraktion aus dem Sprachsignal gebildete Folge von Merkmalen zu einzelnen Signalsegmenten, also beispielsweise eine Folge von Mel-Cepstral-Koeffizienten.

Das erfindungsgemäße Verfahren sieht eine sequenzielle Spracherkennung vor, bei welcher die Spracheingabe zuerst dem Onboard-Spracherkenner für eine Schlüsselworterkennung zugeführt wird und das erste Erkennungsergebnis empfangen wird. Anhand des ersten Erkennungsergebnisses wird dann aus der Spracheingabe zumindest ein durch den Onboard-Spracherkenner nicht-erkennbarer Anteil extrahiert und dieser dann dem Offboard-Spracherkenner zugeführt. Hierdurch ergibt sich der Vorteil, dass die Spracherkennung zunächst mit dem in der Regel eine geringere Reaktionszeit aufweisenden Onboard-Spracherkenner durchgeführt wird und nur für den Fall, dass es Probleme bei der Erkennung gibt, der in der Regel leistungsstärkere Offboard-Spracherkenner hinzugezogen wird. Ein weiterer Vorteil besteht darin, dass anhand der Schlüsselworterkennung durch die Verarbeitungseinrichtung entschieden werden kann, welchem aus mehreren möglichen Offboard-Spracherkennern die Spracheingabe zuzuführen ist. Wird beispielsweise anhand der Schlüsselworterkennung erkannt, dass der Benutzer ein Navigationsziel festlegen möchte, kann entsprechend ein Offboard-Spracherkenner für ein Navigationssystem angesteuert werden.

Das erfindungsgemäße Verfahrens sieht außerdem vor, zumindest eine Spracheingabe in einer parallelen Spracherkennung dem Onboard-Spracherkenner und unabhängig davon dem Offboard-Sprächerkenner zuzuführen. Dann stehen zwei Erkennungsergebnisse zur Verfügung, die sich jeweils auf die gesamte Spracheingabe beziehen. Beispielsweise kann dann als das entgültige Erkennungsergebnis derjenige Sprachtext ausgegeben werden, der in beiden Erkennungsergebnissen als Sprachtextkandidat enthalten ist. Ein anderer Grund dafür, einen Onboard- und einen Offboard-Erkenner parallel zu nutzen, ist, dass beide Erkenner unterschiedliche Funktionsumfänge abdecken können. Man bekommt dann nicht zwei gleiche oder ähnliche Ergebnisse, sondern unterschiedliche. Eins von beiden weist dann in der Regel aber eine deutlich höhere Konfidenz auf, also einen Indizwert für die Richtigkeit der Erkennung, so dass ebenfalls eine sinnvolle Auswahl eines Sprachtextkandidaten möglich ist.

Gemäß einer vorteilhaften Ausführungsform des Verfahrens wird zum Ermitteln des Sprachtextes durch die Verarbeitungseinrichtung aus dem ersten und dem zweiten Erkennungsergebnis der Sprachtext in Abhängigkeit von einer bestimmten Priorität für einen vorbestimmten Sprachtextinhalt ermittelt. Mit Sprachtextinhalt ist hier ein thematischer Kontext gemeint, in welchem der Benutzer die Spracheingabe ausgesprochen hat. Wird also beispielsweise durch die Schlüsselworterkennung in einer sequentiellen Spracherkennung erkannt, dass es sich um eine Navigationszieleingabe handelt, so kann dann aus dem zweiten Erkennungsergebnis des Offboard-Spracherkenners aus dem zweiten Erkennungsergebnis gezielt ein solcher Sprachtextkandidat herausgesucht werden, der sich auf ein Navigationsziel bezieht. Die Priorität für den Sprachtextinhalt "Navigation" wird dann also durch die Schlüsselworterkennung festgelegt.

Gemäß einer vorteilhaften Ausführungsform der Erfindung wird durch die Verarbeitungseinrichtung aus dem ersten und dem zweiten Erkennungsergebnis der Sprachtext in Abhängigkeit von zumindest einem Umgebungsparameter ermittelt. Ein solcher Umgebungsparameter beschreibt die aktuelle Erkennungssituation in dem Kraftfahrzeug. Beispielsweise kann durch einen Umgebungsparameter angegeben sein, ob das Kraftfahrzeug im Stau steht, wo sich das Kraftfahrzeug befindet (beispielsweise Geokoordinaten eines GPS-Empfängers), ob sich das Fahrzeug am Anfang oder am Ende einer geplanten Fahrroute befindet, ob sich das Kraftfahrzeug gerade auf einer Fahrt zum Arbeitsplatz des Fahrers oder ob es sich auf der Rückfahrt nach Hause befindet. Der Fahrttype (z.B. Bürofahrt oder Heimfahrt) kann beispielsweise aus einem aktivierten Personenprofil des Fahrers ausgelesen werden.

Zusätzlich oder alternativ dazu kann der Sprachtext auch in Abhängigkeit von einem aktuellen Fahrzeugzustand ermittelt werden. Beispielsweise kann zugrunde gelegt werden, ob gerade ein Telefonanruf eingetroffen ist und dem Fahrer beispielsweise durch einen Klingelton gemeldet wird. Genauso kann überprüft werden, ob dem Fahrer gerade ein bestimmter Hinweis im Kraftfahrzeug angezeigt worden ist, beispielsweise ein Warnsignal. Ein Umgebungsparameter und der aktuelle Fahrzeugzustand sind ein zuverlässiger Hinweis darauf, was ein Benutzer gerade mit seiner Spracheingabe sagen wollte. Befindet sich der Fahrer beispielsweise gerade auf dem Weg von der Arbeit nach Hause, so wird er mit einer höheren Wahrscheinlichkeit als Spracheingabe etwas meinen, was sich auf seine Freizeit bezieht. Anders herum wird ein Fahrer auf dem Weg zur Arbeit eher berufliche Dinge regeln oder vorbereiten, was dann ebenfalls einen wichtigen Kontext für die Spracherkennung liefert. Wird dem Fahrer ein Warnhinweis angezeigt, so wird er mit seiner Spracheingabe vermutlich Bezug auf diesen Warnhinweis nehmen. Der Umgebungsparameter und der Fahrzeugzustand können beim Ermitteln des Sprachtextes in der Weise genutzt werden, dass bei einem Erkennungsergebnis, das mehrere Sprachtextkandidaten aufweist, also mehrere mögliche sinnvolle Erkennungsergebnisse, diejenigen bevorzugt oder priorisiert werden, die zu dem jeweiligen Umgebungsparameter und/oder Fahrzeugzustand passen.

Besonders sinnvoll ist es, wenn bei dem Verfahren durch die Verarbeitungseinrichtung aus dem ersten und dem zweiten Erkennungsergebnis der Sprachtext in Abhängigkeit von vorangegangenen Bedienhandlungen des Benutzers ermittelt wird. Die Bedienhandlung betrifft insbesondere ein Gerät des Kraftfahrzeugs. Aktiviert der Benutzer beispielsweise ein Navigationssystem des Kraftfahrzeugs und erfolgt dann innerhalb eines vorbestimmten Zeitraums, beispielsweise 2 Minuten oder 5 Minuten, ohne dass der Benutzer ein anderes Gerät aktiviert hat, eine Spracheingabe, so kann davon ausgegangen werden, dass sich die Spracheingabe auf die Bedienung des Navigationsgeräts bezieht.

Eine andere vorteilhafte Ausführungsform des Verfahrens sieht vor, dass durch die Sprachverarbeitungseinrichtung aus dem ersten und dem zweiten Erkennungsergebnis der Sprachtext in Abhängigkeit von Statistiken aus vorangegangenen Spracheingaben ermittelt wird. Aus vorangegangenen Spracheingaben kann ermittelt werden, welche typischen Fehler ein Benutzer beim Bedienen eines Spracheingabesystems macht. Des Weiteren kann erkannt werden, welche Vorlieben der Benutzer hat, das heißt für welchen Erkennungskontext oder welche Erkennungsaufgaben oder Anwendungen oder Geräte er das Spracherkennungssystem überhaupt nutzt.

Eine andere Ausführungsform des Verfahrens sieht vor, dass das erste und/oder das zweite Erkennungsergebnis eine N-best-Liste mit mehreren nach Rang geordneten Sprachtextkandidaten umfasst und/oder zumindest eine Wahrscheinlichkeitseingabe zu einem der Sprachtextkandidaten in einem oder beiden Erkennungsergebnissen enthalten ist. Der Sprachtext wird dann in Abhängigkeit von dem Rang zumindest eines Sprachtextkandidaten und/oder der Wahrscheinlichkeitsangabe zumindest eines Sprachtextkandidaten ermittelt. Insbesondere wenn der Onboard-Spracherkenner und der Offboard-Spracherkenner unterschiedliche Ergebnislisten liefern, kann durch Vergleichen von Wahrscheinlichkeitsangaben oder durch Auswerten eines Ranges eines bestimmten Sprachtextkandidaten unabhängig vom Kontext ermittelt werden, welcher der Spracherkenner die Spracheingabe zuverlässiger erkannt hat.

Anhand des Ranges eines Sprachtextkandidaten kann erkannt werden, wie wahrscheinlich es ist, dass ein bestimmter Sprachtextkandidat relativ zu anderen Sprachtextkandidaten das richtige Ergebnis ist. Wahrscheinlichkeitsangaben können bei Spracherkennern beispielsweise in Form von Log-Likelihood-Werten angegeben sein, die den Vorteil aufweisen, dass sie absolute Zuverlässigkeitswerte darstellen.

Eine weitere vorteilhafte Ausführungsform des Verfahrens sieht vor, dass zumindest eine sicherheitsrelevante Spracheingabe ausschließlich dem Onboard-Spracherkenner zugeführt wird. Erkennt beispielsweise der Onboard-Spracherkenner ein Schlüsselwort in der Spracheingabe, welches darauf hinweist, dass der Benutzer persönliche Daten preisgibt, kann dies dazu genutzt werden, eine weitere Spracherkennung durch den Offboard-Spracherkenner zu unterdrücken.

Das Verfahren ist nämlich nicht darauf angewiesen, dass stets alle Spracheingaben sowohl vom Onboard-Spracherkenner als auch vom Offboard-Spracherkenner verarbeitet werden. Das erfindungsgemäße Verfahren sieht entsprechend vor, dass durch die Verarbeitungseinrichtung für die Spracherkennung in Abhängigkeit von zumindest einem Steuerparameter einer aus den folgenden vier Modi ausgewählt und aktiviert wird: Eine vollständige Onboard-Spracherkennung, eine vollständige Offboard-Spracherkennung, eine sequentielle Spracherkennung, wie sie bereits beschrieben wurde, eine parallele Spracherkennung, wie sie ebenfalls bereits beschrieben wurde. Hierdurch ergibt sich der Vorteil, dass das Spracherkennungssystem flexibel reagieren kann. Besteht beispielsweise gerade keine Funkverbindung von dem Kraftfahrzeug zu einem Datennetzwerk, über welches der Offboard-Spracherkenner erreichbar ist, so kann dennoch eine Erkennung auf Grundlage des ersten Modus (vollständige Onboard-Spracherkennung) durchgeführt werden. Bei bestehender Funkverbindung kann dann je nach verfügbarer Bandbreite der Funkverbindung einer der anderen Modi ausgewählt werden.

Ein anderer, besonders geeigneter Steuerparameter für das Umschalten zwischen den Modi ist eine Angabe zu einem aktuellen Funktionsszenario. Mit Funktionsszenario ist dabei gemeint, welcher Bedienvorgang durch die Spracherkennung vom Benutzer eigentlich durchgeführt werden möchte. Soll beispielsweise eine einfache Menübedienung beispielsweise in einem Infotainmentsystem zum Auswählen eines Menüpunkts erfolgen, so lohnt sich hier in der Regel der darauf spezialisierte Onboard-Spracherkenner, da dieser zuverlässig arbeitet. Wird also erkannt, dass der Benutzer in einem Menü eine Auswahl treffen möchte, so kann hier der erste Modus mit der vollständigen Onboard-Spracherkennung aktiviert werden. Genauso kann beispielsweise bei einer Spracheingabe mit dem Sprachtextinhalt: "Google-Internet-Suche" automatisch auch gleich einer der anderen Modi aktiviert werden, da ohnehin ein Übertragungskanal für die Internetsuche mittels eines Funkmoduls aufgebaut wird.

Wie bereits ausgeführt, gehört zu der Erfindung auch Infotainmentsystem für ein Kraftfahrzeug. Dieses zeichnet sich dadurch aus, dass es eine Verarbeitungseinrichtung aufweist, die dazu ausgelegt ist, eine Ausführungsform des erfindungsgemäßen Verfahrens durchzuführen.

Schließlich gehört zu der Erfindung auch ein Kraftfahrzeug. Das erfindungsgemäße Kraftfahrzeug weist eine Erfassungseinrichtung, einen Onboard-Spracherkenner, die bereits beschriebene Verarbeitungseinrichtung und eine Kommunikationseinrichtung auf. Die Erfassungseinrichtung ist dazu ausgelegt, eine Spracheingabe eines Benutzers zu erfassen und die erfasste Spracheingabe an die Verarbeitungseinrichtung auszugeben. Die Verarbeitungseinrichtung stellt die bereits beschriebene erfindungsgemäße Verarbeitungseinrichtung zum Ausführen einer Ausführungsform des erfindungsgemäßen Verfahrens dar. Die Verarbeitungseinrichtung kann beispielsweise in Form des bereits beschriebenen erfindungsgemäßen Infotainmentsystems bereitgestellt sein. Es kann sich hierbei aber auch um beispielsweise ein Programmmodul für eine zentrale Recheneinheit des Kraftfahrzeugs handeln. Unter einer Kommunikationsverbindung ist im Zusammenhang mit der Erfindung insbesondere ein Mobilfunkmodul, beispielsweise ein LTE-Modul oder ein UMTS-Modul zu verstehen. Es kann sich hierbei aber auch beispielsweise um ein WLAN-Modul (WLAN - Wireless Local Area Network) handeln.

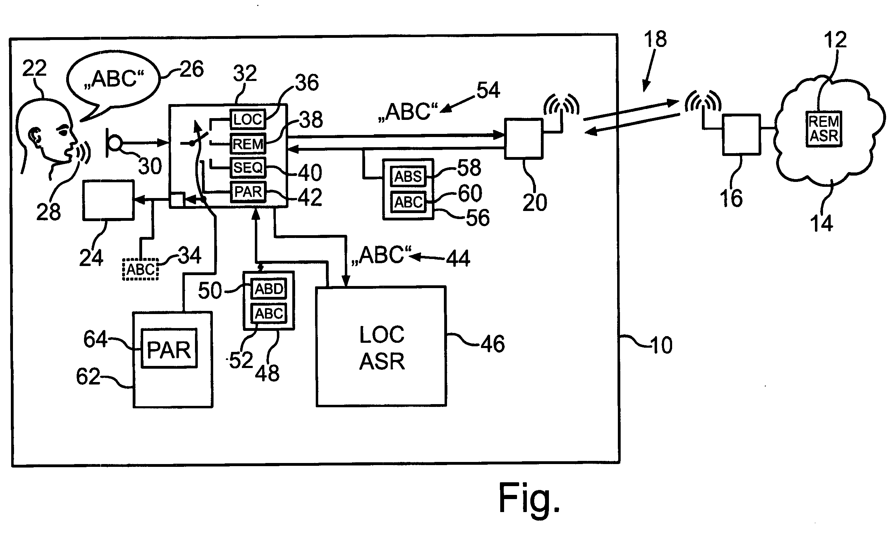

Im Folgenden ist die Erfindung noch einmal anhand eines konkreten Ausführungsbeispiels beschrieben. Hierzu zeigt die einzige Figur (Fig.) eine Ausführungsform des erfindungsgemäßen Kraftfahrzeugs. In der Fig. ist ein Kraftfahrzeug 10 gezeigt, bei dem es sich beispielsweise um einen Kraftwagen, insbesondere einen Personenkraftwagen, handeln kann. Des Weiteren ist in der Fig. eine Serveranordnung 12 gezeigt, welche einen Offboard-Spracherkenner (REM REC - Remote Recognizer) umfasst, welcher ein an sich aus dem Stand der Technik bekannter Spracherkenner für eine ASR sein kann. Die Serveranordnung 12 kann beispielsweise Bestandteil des Internets 14 sein. Von dem Kraftwagen 10 aus ist die Serveranordnung 12 beispielsweise über ein Mobilfunknetz 16, beispielsweise ein UMTS-Netz oder LTE-Netz, für eine Datenkommunikation über eine bidirektionale Funkverbindung 18 erreichbar. Fahrzeugseitig wird die bidirektionale Funkverbindung 18 durch ein Kommunikationsmodul 20 des Kraftfahrzeugs 10 in an sich bekannter Weise ermöglicht.

In dem Kraftfahrzeug 10 kann ein Benutzer 22, beispielsweise ein Fahrer, eine Spracherkennung durchführen lassen, um beispielsweise ein Gerät 24 des Kraftfahrzeugs 10 mit der Sprache bedienen zu können. Beispielsweise kann das Diktieren von Textnachrichten (SMS, E-Mail) oder das Auswählen von Menüeinträgen aus einem Bedienmenü per Spracheingabe ermöglicht sein.

In dem gezeigten Beispiel spricht der Benutzer 22 hierzu eine Sprachäußerung 26 aus (ABC). Hierbei wird die Darstellung in Anführungsstrichen "ABC" dazu genutzt zu symbolisieren, dass die Sprachäußerung 26 noch als Audiosignal und nicht als computerinterpretierbarer Sprachtext vorliegt, also z.B. als Zeichenkette, z.B. im ASCII-Format. Der Sprachschall 28 der Sprachäußerung 26 wird beispielsweise durch eine Mikrofonanordnung 30 aus einem oder mehreren Mikrofonen in dem Kraftfahrzeug 10 erfasst und einer Verarbeitungseinrichtung 32 als Sprachsignal (analog, digital, in Form von Merkmalskoeffizienten) zugeführt. Die Verarbeitungseinrichtung 32 kann beispielsweise Bestandteil eines Infotainmentsystems des Kraftfahrzeugs 10 sein oder einer zentralen Rechnereinrichtung. Die Verarbeitungseinrichtung 32 koordiniert die Spracherkennung, durch welche die Sprachäußerung 26 in einen Sprachtext 34 umgewandelt wird, welcher dann als Eingabe für das Gerät 24 und gegebenenfalls weitere Geräte an diese ausgegeben wird. Die Verarbeitungseinrichtung 32 kann hierzu vier Verarbeitungsmodi 36, 38, 40, 42 aufweisen, zwischen denen die Verarbeitungseinrichtung 32 umschalten kann.

In dem Modus 36 wird eine lokale Spracherkennung (LOC - Local) durchgeführt, bei welcher die Sprachäußerung 26 als Spracheingabe 44 einem Onboard-Spracherkenner, also einem fahrzeuginternen Spracherkenner 46, zugeführt wird, welcher in an sich bekannter Weise ausgestaltet sein kann. Der Onboard-Spracherkenner (LOC ASR - Local ASR) erzeugt in Abhängigkeit von der Spracheingabe 44 ein erstes Erkennungsergebnis 48 und gibt dieses an die Verarbeitungseinrichtung 32 aus. Das erste Erkennungsergebnis 48 kann beispielsweise eine oder mehrere Sprachtextkandidaten 50, 52 für den letztendlich als Erkennungsergebnis ausgegebenen Sprachtext 34 umfassen.

In dem zweiten Erkennungsmodus 38 wird ausschließlich eine Offboard-Spracherkennung (REM ASR - Remote ASR) mittels der Serveranordnung 12 durchgeführt. Hierzu wird durch die Verarbeitungseinrichtung 32 die Sprachäußerung 26 als Spracheingabe 54 über die Kommunikationseinrichtung 20 an die Serveranordnung 12 übermittelt. Die Spracheingabe 54 und die Spracheingabe 44 können in unterschiedlichen Formaten (als Audiosignal (Audiostream) oder Merkmalskoeffizienten) übermittelt werden. Das zweite Erkennungsergebnis 56 der Serveranordnung 12 wird daraufhin durch die Verarbeitungseinrichtung 32 empfangen. Auch das Erkennungsergebnis 56 kann einen oder mehrere Sprachtextkandidaten 58, 60 umfassen.

Da die Erkennungsvorrichtungen in der Regel unterschiedliche Arten von Sprachinteraktion bieten, ist es ein Problem, die Art von Spracheingabe im Fluge zu kategorisieren und sie zu der geeigneten Spracherkennungsmaschine weiterzugeben. Nach einer erfolgreichen Erkennung müssen die Ergebnisse der zwei Erkennungsvorrichtungen ausgewertet und das relevanteste dem Fahrer präsentiert werden. Eine Teilmenge des aufgezeichneten Audio muss zu der entfernten Erkennungsvorrichtung weitergeleitet werden.

Die vorliegende Erfindung stellt deshalb die Methodologie bereit, um die Benutzung von Spracherkennungsmaschinen an Bord und außerhalb zusammenzulegen. Ein solches hybrides Sprachdialogsystem besteht aus vier verschiedenen Arten von Sprachinteraktionen:
1) Erkennung vollständig an Bord (Modus 36): wie etwa Sprachinteraktion für Befehle, Listen usw. Erkennung wird in der Haupteinheit durchgeführt.
2) Erkennung vollständig online (Modus 38): wie etwa erweiterte Suche, Transkription von Sprache in Text, komplexe Dialoge usw. Erkennung wird auf einem Online-Server durchgeführt und Ergebnisse werden als Text auf die Haupteinheit heruntergeladen.
3) Hybrid-Streaming-Erkennung (Modus 42, PAR - parallel): eine Mischung von Erkennung an Bord und Online. Audio wird gleichzeitig zur Detektion von lokalen Befehlen durch das ASR an Bord verarbeitet und zur komplexen Transkription von Sprache in Text zu einem entfernten Server gestreamt. Ergebnisse von den zwei Erkennungsvorrichtungen werden dem Fahrer auf der Basis einer vordefinierten Priorität präsentiert.
4) Hybride One-Shot-Erkennung (Modus 40, SEQ - sequentiell): eine

Mischung aus Erkennung an Bord und Online. Audio wird zuerst zur Schlüsselwortdetektion durch das ASR an Bord verarbeitet. Auf der Basis des detektierten Schlüsselworts wird eine Teilmenge der Audiodatei extrahiert und zu einer Online-Erkennungsvorrichtung weitergeleitet.

Die vier verschiedenen Betriebsarten 36, 38, 40, 42 einer solchen hybriden Erkennungsvorrichtung werden in dem Sprachdialogsystem auf der Basis des spezifischen Funktionsszenarios eingesetzt. In einem spezifischen Benutzungsfall kann der Dialogmanager für jeden Dialogschritt eine Kombination der vier Erkennungsbetriebsarten sowie eine Änderung der Betriebsart verwenden. Die beste Betriebsart für einen bestimmten Dialog wird durch die Komplexität der Erkennungsaufgaben bestimmt.

In den hybriden Erkennungsbetriebsarten muss die erfasste Sprachäußerung auf zwei verschiedene Weisen extrahiert und zu den beiden ASR weitergeleitet werden:
1) Hybride Streaming-Erkennung (Modus 42) - in diesem Fall wird das Audio zu dem Server gestreamt, sobald eine Verbindung hergestellt ist. Gleichzeitig verarbeitet das ASR an Bord dieselbe Audiodatei. Sobald eines der beiden ASR erfolgreiche Erkennung signalisiert, ist das Ergebnis auszuwerten und das System muss entscheiden, ob dieses Ergebnis dem Benutzer zu präsentieren ist oder das andere ASR die Erkennung zuerst abschließen gelassen wird. Diese Entscheidung basiert auf einer Menge von vordefinierten Prioritäten.
2) Hybride One-Shot-Erkennung (Modus 40) - in diesem Fall wird das Audio zuerst durch das ASR an Bord verarbeitet. Beim Abschluss der Erkennung an Bord detektiert das ASR eine Menge von vordefinierten Schlüsselwörtern aus dem Audio-Stream, markiert aber auch einen Teil des Audio als nichtverständlich. Diese Teilmenge des anfänglichen Audio-Streams wird extrahiert und zur erweiterten Spracherkennung zu dem Online-ASR weitergeleitet.

Das Umschalten zwischen den Modi 36, 38, 40, 42 kann durch die Verarbeitungseinrichtung 32 in Abhängigkeit von Parameterwerten durchgeführt werden, die durch beispielsweise eine fahrzeuginterne Sensorik und/oder Fahrzeugzustandsüberwachung und/oder einen Empfänger für fahrzeugexterne Zustandsparameter, wie beispielsweise einen Rundfunkempfänger, erzeugt werden. Die überwachten Parameter PAR beschreiben also allgemein ein spezifisches Funktionsszenario 62, also den Situationskontext, in welchem die Erkennung der Sprachäußerung 26 durchgeführt wird. Ein typischer Situationskontext ist das Verfassen einer Nachricht oder das Bedienen eines Geräts. Auch die Auswahl des Sprachtextkandidaten 50, 52, 58, 60 aus den beiden Erkennungsergebnissen 48, 60 als das endgültige Erkennungsergebnis, das heißt der Sprachtext 34, kann in Abhängigkeit von den aktuellen Parameterwerten des Funktionsszenarios 62 durch ein Auswahlmodul 66 erfolgen.

Durch das Bespiel ist gezeigt, wie sich mit der Erfindung die folgenden Vorteile realisieren lassen:
- Kombinieren von ASR an Bord und Online zu vier verschiedenen Betriebsarten für die Spracherkennung im Auto.
- Extrahieren einer durch eine Online-Erkennungsvorrichtung zu verarbeitenden Audio-Äußerung auf der Basis einer Schlüsselwortextraktion an Bord.
- Gleichzeitige Spracherkennung an Bord und Online mit Priorisierung von Erkennungsergebnissen.

## Patentansprüche

1. Verfahren zur Spracherkennung in einem Kraftfahrzeug (10), wobei durch eine fahrzeuginterne Verarbeitungseinrichtung (32) von einer fahrzeuginternen Erfassungseinrichtung (30) Spracheingaben (26) eines Benutzers (22) empfangen werden und zumindest eine empfangene Spracheingabe (26) durch die Verarbeitungseinrichtung (32) ohne eine Rückfrage an den Benutzer (22) einer automatischen Spracherkennung zum Erzeugen eines Sprachtextes (34) zugeführt wird, wobei die Spracheingabe (44) hierzu durch die Verarbeitungseinrichtung (32) einem fahrzeuginternen Onboard-Spracherkenner (46) zugeführt wird und von diesem durch die Verarbeitungseinrichtung (32) ein erstes Erkennungsergebnis (48) empfangen wird, wobei durch die Verarbeitungseinrichtung (32) die Spracheingabe (54) ganz oder teilweise auch einem fahrzeugexternen Offboard-Spracherkenner (12) zugeführt wird und von diesem durch die Verarbeitungseinrichtung (32) ein zweites Erkennungsergebnis (56) empfangen wird und in Abhängigkeit von dem ersten und dem zweiten Erkennungsergebnis (48, 56) durch die Verarbeitungseinrichtung (32) der Sprachtext (34) ermittelt wird,
**dadurch gekennzeichnet, dass**
a) zumindest eine Spracheingabe (26) in einer sequentiellen Spracherkennung (40) zuerst dem Onboard-Spracherkenner (46) für eine Schlüsselworterkennung zugeführt wird und das erste Erkennungsergebnis (48) empfangen wird und anhand des ersten Erkennungsergebnisses (48) aus der Spracheingabe (26) zumindest ein nicht-erkennbarer Anteil (54) extrahiert und dem Offboard-Spracherkenner (12) zugeführt wird und
b) zumindest eine Spracheingabe (26) in einer parallelen Spracherkennung (42) dem Onboard-Spracherkenner (46) und unabhängig davon dem Offboard-Spracherkenner (12) zugeführt wird und
c) durch die Verarbeitungseinrichtung (32) für die Spracherkennung in Abhängigkeit von zumindest einem Steuerparameter (64) einer aus den folgenden vier Modi (36, 38, 40, 42) ausgewählt und aktiviert wird:
- eine vollständige Onboard-Spracherkennung (36),
- eine vollständige Offboard-Spracherkennung (38),
- die sequentielle Spracherkennung (40),
- die parallele Spracherkennung (42),
wobei als Steuerparameter (64) eine Angabe zu einem aktuellen Funktionsszenario (62) zugrundegelegt wird, wobei durch das Funktionsszenario angegeben ist, welcher Bedienvorgang durch die Spracherkennung vom Benutzer durchgeführt werden soll.

2. Verfahren nach Anspruch 1, wobei durch die Verarbeitungseinrichtung (32) aus dem ersten und dem zweiten Erkennungsergebnis (48, 56) der Sprachtext (34) in Abhängigkeit von einer vorbestimmten Priorität für einen vorbestimmten Sprachtextinhalt ermittelt wird.

3. Verfahren nach einem der vorhergehenden Ansprüche, wobei durch die Verarbeitungseinrichtung (32) aus dem ersten und dem zweiten Erkennungsergebnis (48, 56) der Sprachtext (34) in Abhängigkeit von zumindest einem Umgebungsparameter (64), welcher die aktuelle Erkennungssituation (62) in dem Kraftfahrzeug (10) beschreibt, und/oder einen aktuellen Fahrzeugzustand (64) ermittelt wird.

4. Verfahren nach einem der vorhergehenden Ansprüche, wobei durch die Verarbeitungseinrichtung (32) aus dem ersten und dem zweiten Erkennungsergebnis (48, 56) der Sprachtext (34) in Abhängigkeit von vorangegangenen Bedienhandlungen des Benutzers (22) ermittelt wird.

5. Verfahren nach einem der vorhergehenden Ansprüche, wobei durch die Verarbeitungseinrichtung (32) aus dem ersten und dem zweiten Erkennungsergebnis (48, 56) der Sprachtext (34) in Abhängigkeit von Statistiken aus vorangegangenen Spracheingaben ermittelt wird.

6. Verfahren nach einem der vorhergehenden Ansprüche, wobei das erste und/oder das zweite Erkennungsergebnis (48, 56) eine N-best-Liste mit mehreren nach Rang geordneten Sprachtextkandidaten (50, 52, 58, 60) und/oder zumindest eine Wahrscheinlichkeitsangabe zu einem der Sprachtextkandidaten (50, 52, 58, 60) umfasst und der Sprachtext (34) in Abhängigkeit von dem Rang und/oder der zumindest einen Wahrscheinlichkeitsangabe ermittelt wird.

7. Verfahren nach einem der vorhergehenden Ansprüche, wobei zumindest eine sicherheitsrelevante Spracheingabe ausschließlich dem Onboard-Spracherkenner (46) zugeführt wird.

8. Infotainmentsystem für ein Kraftfahrzeug (10), welches eine Verarbeitungseinrichtung (32) aufweist, die dazu ausgelegt ist, ein Verfahren nach einem der vorhergehenden Ansprüche durchzuführen.

9. Kraftfahrzeug (10) mit einer Erfassungseinrichtung (30), einem Onboard-Spracherkenner (46), einer Verarbeitungseinrichtung (32) und einer Kommunikationseinrichtung (20), wobei die Erfassungseinrichtung (30) dazu ausgelegt ist, eine Spracheingabe (26) eines Benutzers (22) zu erfassen und die erfasste Spracheingabe (26) an die Verarbeitungseinrichtung (32) auszugeben, die Verarbeitungseinrichtung (32) dazu ausgelegt ist, ein Verfahren nach einem der Ansprüche 1 bis 7 durchzuführen und hierzu die Spracheingabe (44) dem Onboard-Spracherkenner (46) zuzuführen und über die Kommunikationseinrichtung (20) mit einem fahrzeugexternen Offboard-Spracherkenner (12) zu kommunizieren.

## Claims

1. Method for speech recognition in a motor vehicle (10), wherein speech inputs (26) of a user (22) are received by a vehicle-internal processing device (32) from a vehicle-internal capture device (30) and at least one received speech input (26) is fed by the processing device (32), without asking the user (22), to an automatic speech recognition system in order to generate a spoken text (34), wherein the speech input (44) to this end is fed by the processing device (32) to a vehicle-internal on-board speech recognition unit (46) and a first recognition result (48) is received from the latter by the processing device (32), wherein the speech input (54) is also fed, in full or in part, by the processing device (32) to a vehicle-external off-board speech recognition unit (12) and a second recognition result (56) is received from the latter by the processing device (32), and the spoken text (34) is determined by the processing device (32) as a function of the first and the second recognition result (48, 56), **characterized in that**
a) in sequential speech recognition (40), at least one speech input (26) is fed first to the on-board speech recognition unit (46) for keyword recognition and the first recognition result (48) is received and, based on the first recognition result (48), at least one unrecognizable component (54) is extracted from the speech input (26) and is fed to the off-board speech recognition unit (12), and
b) in parallel speech recognition (42), at least one speech input (26) is fed to the on-board speech recognition unit (46) and, independently thereof, to the off-board speech recognition unit (12), and
c) one of the following four modes (36, 38, 40, 42) is selected and activated by the processing device (32) for the speech recognition as a function of at least one control parameter (64):
- complete on-board speech recognition (36),
- complete off-board speech recognition (38),
- sequential speech recognition (40),
- parallel speech recognition (42),
wherein information relating to a current operational scenario (62) is used as the control parameter (64), wherein the operational scenario indicates what operating process is to be carried out by the speech recognition of the user.

2. Method according to claim 1, wherein the spoken text (34) is determined by the processing device (32) from the first and the second recognition result (48, 56) as a function of a predetermined priority for a predetermined spoken text content.

3. Method according to any one of the preceding claims, wherein the spoken text (34) is determined by the processing device (32) from the first and the second recognition result (48, 56) as a function of at least one environmental parameter (64), which describes the current recognition situation (62) in the motor vehicle (10), and/or a current vehicle state (64).

4. Method according to any one of the preceding claims, wherein the spoken text (34) is determined by the processing device (32) from the first and the second recognition result (48, 56) as a function of preceding operating actions of the user (22).

5. Method according to any one of the preceding claims, wherein the spoken text (34) is determined by the processing device (32) from the first and the second recognition result (48, 56) as a function of statistics from preceding speech inputs.

6. Method according to any one of the preceding claims, wherein the first and/or the second recognition result (48, 56) comprises an N-best list including multiple ranked spoken text candidates (50, 52, 58, 60) and/or at least one probability information item relating to one of the spoken text candidates (50, 52, 58, 60), and the spoken text (34) is determined as a function of the rank and/or of the at least one probability information item.

7. Method according to any one of the preceding claims, wherein at least one safety-related speech input is fed exclusively to the on-board speech recognition unit (46).

8. Infotainment system for a motor vehicle (10), comprising a processing device (32) which is designed to carry out a method according to any one of the preceding claims.

9. Motor vehicle (10) comprising a capture device (30), an on-board speech recognition unit (46), a processing device (32) and a communication device (20), wherein the capture device (30) is designed to capture a speech input (26) of a user (22) and to output the captured speech input (26) to the processing device (32), the processing device (32) is designed to carry out a method according to any one of claims 1 to 7 and, to this end, to feed the speech input (44) to the on-board speech recognition unit (46) and to communicate via the communication device (20) with a vehicle-external offboard speech recognition unit (12).

## Revendications

1. Procédé de reconnaissance vocale dans un véhicule automobile (10), selon lequel des entrées vocales (26) d'un utilisateur (22) sont reçues d'un dispositif d'acquisition (30) interne au véhicule par un dispositif de traitement (32) interne au véhicule et au moins une entrée vocale reçue (26) est envoyée par le dispositif de traitement (32) sans rappel de l'utilisateur (22) à un dispositif de reconnaissance vocale automatique pour la production d'un texte parlé (34), selon lequel l'entrée vocale (44) est envoyée à cet effet par le dispositif de traitement (32) à un dispositif embarqué de reconnaissance vocale (46) interne au véhicule et un premier résultat de reconnaissance (48) est reçu de celui-ci par le dispositif de traitement (32) et selon lequel l'entrée vocale (54) est aussi envoyée, entièrement ou partiellement, par le dispositif de traitement (32) à un dispositif distant de reconnaissance vocale (12) externe au véhicule, un deuxième résultat de reconnaissance (56) est reçu de celui-ci par le dispositif de traitement (32) et le texte parlé (34) est déterminé par le dispositif de traitement (32) en fonction du premier et du deuxième résultat de reconnaissance (48, 56),
**caractérisé en ce que**
a) au moins une entrée vocale (26) dans une reconnaissance vocale séquentielle (40) est d'abord envoyée au dispositif embarqué de reconnaissance vocale (46) pour une reconnaissance de mot-clé et le premier résultat de reconnaissance (48) est reçu et, à l'aide du premier résultat de reconnaissance (48), au moins une partie non reconnaissable (54) est extraite de l'entrée vocale (26) et est envoyée au dispositif distant de reconnaissance vocale (12),
b) au moins une entrée vocale (26) dans une reconnaissance vocale parallèle (42) est envoyée au dispositif embarqué de reconnaissance vocale (46) et, indépendamment de cela, au dispositif distant de reconnaissance vocale (12) et
c) l'un des quatre modes (36, 38, 40, 42) ci-dessous est sélectionné en fonction d'au moins un paramètre de commande (64) et activé par le dispositif de traitement (32) pour la reconnaissance vocale :
- une reconnaissance vocale embarquée (36) complète,
- une reconnaissance vocale distante (38) complète,
- la reconnaissance vocale séquentielle (40),
- la reconnaissance vocale parallèle (42),
une indication qui porte sur un scénario fonctionnel actuel (62) servant alors de base comme paramètre de commande (64), le scénario fonctionnel indiquant quel processus de commande souhaite mettre en oeuvre l'utilisateur via la reconnaissance vocale.

2. Procédé selon la revendication 1, selon lequel le texte parlé (34) est déterminé par le dispositif de traitement (32) à partir du premier et du deuxième résultat de reconnaissance (48, 56) en fonction d'une priorité prédéterminée pour un contenu de texte parlé prédéterminé.

3. Procédé selon l'une des revendications précédentes, selon lequel le texte parlé (34) est déterminé par le dispositif de traitement (32) à partir du premier et du deuxième résultat de reconnaissance (48, 56) en fonction d'au moins un paramètre d'environnement (64) décrivant la situation de reconnaissance actuelle (62) dans le véhicule automobile (10) et/ou en fonction d'un état de véhicule actuel (64).

4. Procédé selon l'une des revendications précédentes, selon lequel le texte parlé (34) est déterminé par le dispositif de traitement (32) à partir du premier et du deuxième résultat de reconnaissance (48, 56) en fonction d'opérations de commande antérieures de l'utilisateur (22).

5. Procédé selon l'une des revendications précédentes, selon lequel le texte parlé (34) est déterminé par le dispositif de traitement (32) à partir du premier et du deuxième résultat de reconnaissance (48, 56) en fonction de statistiques issues des entrées vocales antérieures.

6. Procédé selon l'une des revendications précédentes, **caractérisé en ce que** le premier et/ou le deuxième résultat de reconnaissance (48, 56) comprennent une liste des N meilleurs avec plusieurs candidats de texte parlé (50, 52, 58, 60) classés dans un certain ordre et/ou au moins une indication de probabilité pour l'un des candidats de texte parlé (50, 52, 58, 60) et le texte parlé (34) est déterminé en fonction du classement et/ou de l'au moins une indication de probabilité.

7. Procédé selon l'une des revendications précédentes, selon lequel au moins une entrée vocale déterminante pour la sécurité est envoyée exclusivement au dispositif embarqué de reconnaissance vocale (46).

8. Système d'infodivertissement pour un véhicule automobile (10), qui comporte un dispositif de traitement (32) qui est conçu pour mettre en oeuvre un procédé selon l'une des revendications précédentes.

9. Véhicule automobile (10) avec un dispositif d'acquisition (30), un dispositif embarqué de reconnaissance vocale (46), un dispositif de traitement (32) et un dispositif de communication (20), le dispositif d'acquisition (30) étant conçu pour acquérir une entrée vocale (26) d'un utilisateur (22) et pour délivrer l'entrée vocale acquise (26) au dispositif de traitement (32), le dispositif de traitement (32) étant conçu pour mettre en oeuvre un procédé selon l'une des revendications 1 à 7 et, à cet effet, pour envoyer l'entrée vocale (44) au dispositif embarqué de reconnaissance vocale (46) et pour communiquer par l'intermédiaire du dispositif de communication (20) avec un dispositif distant de reconnaissance vocale (12) externe au véhicule.
